(19) Europäisches Patentamt
European Patent Office
Office européen des brevets

(11) EP 2 573 511 A1

(12) **EUROPÄISCHE PATENTANMELDUNG**

(43) Veröffentlichungstag:
27.03.2013 Patentblatt 2013/13

(21) Anmeldenummer: 12006605.5

(22) Anmeldetag: 20.09.2012

(51) Int Cl.:
*G01B 21/22* (2006.01)     *G01B 21/32* (2006.01)
*G01L 3/10* (2006.01)

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 21.09.2011 DE 102011113844

(71) Anmelder: RBH Logistics GmbH
45966 Gladbeck (DE)

(72) Erfinder: Bisswanger, Bastian
74541 Vellberg (DE)

(74) Vertreter: Zinken-Sommer, Rainer
Deutsche Bahn AG
Patentabteilung
Völckerstrasse 5
80939 München (DE)

(54) **Verfahren und Vorrichtung zur Erkennung von dauerhaften Verdrehungen zwischen einer als Nabenkörper ausgebildeten Radscheibe eines Schienenfahrzeuges und einer Welle eines Radsatzes**

(57) Die Erfindung betrifft Verfahren und eine Vorrichtung zur Erkennung von dauerhaften Verdrehungen zwischen einer als Nabenkörper ausgebildeten Radscheibe eines Schienenfahrzeuges und einer Welle eines Radsatzes, wobei die Radscheibe auf die Radsatzwelle aufgepresst wird.

Der Erfindung liegt die Aufgabe zugrunde, die Überwachung einer Welle-Nabe-Welle zu ermöglichen, mit der während des laufenden Betriebs eine einmalig auftretende dauerhafte Verdrehung zwischen Welle und Nabe sicher erkannt werden kann.

Dies wird erfindungsgemäß dadurch erreicht, dass ein Phasenwinkel zwischen der Radscheibe (2) und der Radsatzwelle (1) über das Auslösen eines an einem Lagergehäuse (4) befestigten Sensors (6.1) durch einen auf der Radscheibe (2) festgelegten Messpunkt (5.1) sowie das Auslösen eines ebenfalls am Lagergehäuse befestigten Sensors (6.2) durch einen auf der Radsatzwelle (1) befestigten Messpunkt (5.2) in zwei Drehrichtungen berechnet und mit einem bei Inbetriebnahme kalibrierten Phasenwinkel $\Delta\varphi_0$ verglichen wird, wobei die Berechnung bei einer Drehrichtung "vorwärts" über die Beziehung

$$\Delta\varphi = \frac{\Delta t_{Sw,Sn}}{T_W} \times 2\pi$$

und bei einer Drehrichtung "rückwärts" über die Beziehung

$$\Delta\varphi = \left(1 - \frac{\Delta t_{Sw,Sn}}{T_W}\right) \times 2\pi$$

mit

$\Delta\varphi$ : Phasenwinkel

$T_W$: Dauer für eine Umdrehung der Welle, gemessen als Differenz zwi schen zwei Auslösepunkten des Sensors (6.2) [s]

$\Delta t_{sw,sn}$: zeitliche Differenz zwischen dem Auslösen des Sensors (6.2) und des Sensors (6.1) [s]

durchgeführt wird, als Auslösezeitpunkt eine steigende Flanke (erster Ansprechpunkt des jeweiligen Sensors) gewählt wird und bei einer aufgetretenen Verdrehung ein Warnsignal an ein Rechengerät ausgegeben wird.

- Figur 1 -

Printed by Jouve, 75001 PARIS (FR)

## Beschreibung

Die Erfindung betrifft Verfahren und eine Vorrichtung zur Erkennung von dauerhaften Verdrehungen zwischen einer als Nabenkörper ausgebildeten Radscheibe eines Schienenfahrzeuges und einer Welle eines Radsatzes, wobei die Radscheibe auf die Radsatzwelle aufgepresst wird.

Bei der Erfindung handelt es sich um ein Verfahren und eine Vorrichtung, mit welchem im laufenden Betrieb eines Schienenfahrzeugs detektiert werden kann, ob innerhalb der zu überwachenden Welle-Nabe-Verbindung von Radsatzwelle und Radscheibe eine dauerhafte Verdrehung aufgetreten ist.

Bei Eisenbahntriebfahrzeugen kommt der Überwachung der Radsätze eine große Bedeutung zu, um kritische Zustände rechtzeitig erkennen zu können und geeignete Gegenmaßnahmen ergreifen zu können. So ist beispielsweise wichtig, Verdrehungen im Pressverband zwischen Radscheibe und Radsatzwelle erkennen zu können: Im Falle einer Verdrehung und gleichzeitig auftretender Spurführungskräfte kann es zu einer seitlichen Verschiebung der Radscheibe auf der Radsatzwelle kommen. Damit verringert sich das Spurmaß des betroffenen Radsatzes und die Entgleisungssicherheit des Fahrzeugs ist nicht mehr gewährleistet.

Weiterhin kann das Verfahren in allen weiteren technischen Anwendungen zur Erkennung von dauerhaften Verdrehungen in einer Welle-Nabe-Verbindung eingesetzt werden.

Aktuell können Verdrehungen in der Welle-Nabe-Verbindung eines Eisenbahnradsatzes nur im Stillstand des Fahrzeugs mittels einer Sichtprüfung erkannt werden: In Umfangsrichtung sind drei Markierungen über die Trennfuge zwischen Welle und Nabe aufgebracht. Im Ursprungszustand ist diese Markierung fluchtend, nach einer Verdrehung tritt ein Versatz zwischen der Markierung auf der Welle und auf der Nabe auf. Mit diesem Verfahren kann ein fehlerhafter Zustand des Radsatzes erst nach Beendigung der Fahrt, während der dieser Schaden aufgetreten ist, erkannt werden. Somit besteht für die restliche Fahrt nach dem Auftreten der Radscheibenverdrehung ein gefährlicher Zustand des Fahrzeugs.

Zur Ermittlung der Umdrehungsgeschwindigkeit von rotierenden Körpern sind mehrerer Verfahren bekannt. Alle beruhen darauf, dass feste Punkte auf dem rotierenden Körper aufgebracht sind, die bei Umlauf einen Sensor auslösen. Je nach Anzahl und Art der aufgebrachten Körper kann neben der Umdrehungsgeschwindigkeit auch der jeweils aktuelle Drehwinkel erkannt werden. Werden mit diesen Verfahren sowohl die Umdrehungsgeschwindigkeit der Welle wie auch der Nabe gemessen, kann zwar ein auftretender Unterschied in den Umdrehungsgeschwindigkeiten erkannt werden. Eine dauerhafte Verdrehung der Nabe auf der Welle kann nicht erkannt werden, da die Verdrehung eine momentane Erscheinung ist. Nach der Verdrehung sitzt die Nabe wieder fest auf der Welle und beide Bauteile drehen sich mit wieder mit derselben Umdrehungsgeschwindigkeit.

Weiterhin sind Verfahren bekannt (u.a. DE 10219057A1), bei denen über die Messung der Phasenverschiebung zweier Messscheiben auf derselben Welle jeweils das aktuell auftretende Torsionsmoment in dieser Welle berechnet werden kann. Mit dieser Anwendung ist ebenfalls keine Erkennung einer dauerhaften Verdrehung zwischen zwei Bauteilen möglich, da es sich ausschließlich auf eine Welle beschränkt.

Aus der AT 15 268 E ist ein Verfahren zum Erkennen von Änderungen der relativen Winkelposition zwischen den Stahllaufringen an den Rädern eines Schienenfahrzeugradpaares mit zwei an den Enden einer Achse befestigten Rädern bekannt, bei dem jeder Laufring mit einem magnetischen Muster versehen ist, welches mittels Sensoren abgetastet wird. Durch Vergleich der Sensorsignale in einem Komparator wird die relative Winkelbeziehung zwischen beiden Laufringen bestimmt. Die Verdrehung einer Radscheibe gegenüber einer Radwelle ist auf diese Weise allerdings nicht eindeutig erkennbar.

Die WO 2011/029526 A1 offenbart einen Radsatz eines Schienenfahrzeuges mit zwei in Achsrichtung zueinander beabstandeten Sensoren, wobei jeder Sensor eine mit der Achse fest verbundene und somit mit dieser drehende Scheibe umfasst, welche radial angeordnete Felder aufweist, welche beim Drehen der Achse bzw. Scheibe ein alternierendes Signalmuster hervorrufen. Ein Komparator vergleicht beide Sensorsignale und erzeugt einen Alarm die Abweichung beider Sensorsignale voneinander einen vorgebbaren Grenzwert überschreitet. Dieses Verfahren dient zur Überwachung der Radsatzwelle als solcher.

Die Aufgabe der vorliegenden Erfindung besteht somit darin, eine Überwachung einer Welle-Nabe-Welle zu ermöglichen, mit der während des laufenden Betriebs eine einmalig auftretende dauerhafte Verdrehung zwischen Welle und Nabe sicher erkannt werden kann.

Zur Lösung der Aufgabe dient ein Messaufbau, in dem von einem Rechengerät (nicht dargestellt) die jeweils aktuelle Phasenverschiebung $\Delta\varphi$ zwischen je einem fix auf der Radsatzwelle (2) und der Radscheibe (1) aufgebrachten Messpunktes berechnet wird. Dabei löst der auf der Radsatzwelle aufgebrachte Messpunkt (5.2) den Sensor (6.2) aus, der auf der Radscheibe aufgebrachte Messpunkt (5.1) löst den Sensor (6.1) aus. Dabei errechnet sich die Phasenverschiebung bei Drehrichtung "vorwärts" wie folgt:

$$\Delta\varphi = \frac{\Delta t_{Sw,Sn}}{T_W} \times 2\pi$$

Mit:

$T_W$: Dauer für eine Umdrehung der Welle, gemessen als Differenz zwischen zwei Auslösezeitpunkten des Sensors 6.2 [s]

$\Delta t_{Sw,Sn}$: zeitliche Differenz zwischen dem Auslösen des Sensors 6.2 und des Sensors 6.1 [s]

Als Auslösezeitpunkt wird die ansteigende Flanke, der erste Ansprechzeitpunkt des jeweiligen Sensors, gewählt.

Wird die Drehrichtung geändert, verändert sich die Formel für die Berechnung der Phasenverschiebung:

$$\Delta \varphi = \left(1 - \frac{\Delta t_{Sw,Sn}}{T_W}\right) \times 2\pi$$

Die berechnete Phasenverschiebung wird permanent mit der bei Inbetriebnahme kalibrierten Verschiebung $\Delta \varphi_0$ verglichen. Stimmt $\Delta \varphi$ nicht mehr mit $\Delta \varphi_0$ überein, zeigt dies an, dass zwischen der Radscheibe und der Radsatzwelle eine Verdrehung aufgetreten ist. In diesem Fall gibt das Rechengerät ein Alarmsignal aus.

Wichtig ist, dass der Messpunkt 5.2 außerhalb des Drehmittelpunkts der Welle aufgebracht wird, da sich andernfalls keine Lageänderung des Messpunkts ergibt und die Umdrehungsdauer nicht gemessen werden kann.

Die Genauigkeit des Verfahrens steigt, je größer der Abstand der Messpunkte 5.1 und 5.2 vom Drehmittelpunkt ist. Je weiter außen auf dem Durchmesser an der Radscheibe bzw. der Radsatzwelle die Messpunkte angebracht sind, desto größer wird die in Umfangsrichtung zurückgelegte Wegstrecke bei gleichem Drehwinkel.

Der Vorteil der Erfindung ist die permanente Überwachung. Gegenüber den bekannten Verfahren kann nun auch im Betrieb der Lokomotive eine Verdrehung zwischen Radsatzwelle und Radscheibe erkannt werden. Abhängig vom Gefährdungspotential dieser Verdrehung kann entweder ein einfaches Warnsignal an den Bediener ausgegeben oder ein sofortiger Stillstand der Lokomotive herbeigeführt werden.

In vielen Fällen kann die Erfindung auf schon installierte Einrichtungen zur Messung von Umdrehungsgeschwindigkeiten zurückgreifen. Somit muss nur auf dem noch nicht mit der Messeinrichtung versehenen Bauteil ein Messpunkt markiert und der Erkennungssensor angebracht werden. Zu installieren ist in allen Fällen ein Rechengerät. Eine vorteilhafte Ausführung, vor allem an Maschinen mit häufigen Beschleunigungs- oder Verzögerungsvorgängen, ist die Verwendung eines inkrementalen Drehwinkelzählers mit definiertem Nullpunkt an einem Bauteil. In dieser Variante muss zwischen der Auslösung des Nullwerts am inkrementalen Drehwinkelzähler sowie der Auslösung des Sensors für den mit nur einem Punkt versehenen Bauteils immer dieselbe Anzahl an Auslösungen des inkrementalen Drehwinkelzählers auftreten. Verändert sich die Anzahl der Auslösungen, ist eine Verschiebung zwischen Welle und Nabenkörper aufgetreten. Ebenfalls vorteilhaft ist der Einsatz eines Drehwinkelzählers mit Absolutwinkelzählung an einem Bauteil. Der Messpunkt auf dem anderen Bauteil muss den entsprechenden Sensor immer zum kalibrierten Absolutwinkel auslösen. Entspricht der Auslösezeitpunkt durch den Messpunkt nicht mehr dem kalibrierten Winkel, ist ebenfalls eine dauerhafte Verdrehung zwischen Welle und Nabenkörper aufgetreten.

Eine mögliche Ausführungsvariante ist eine Messung mit optischen Verfahren.

Eine weitere Ausführungsvariante ist die Verwendung von induktiven Messverfahren. Ebenfalls eingesetzt werden können magnetische Verfahren.

**Ausführungsbeispiel**

Weitere Vorteile, Einzelheiten und Weiterbildungen der vorliegenden Erfindung ergeben sich aus der nachfolgenden Beschreibung bevorzugter Ausführungsvarianten, unter Bezugnahme auf die Zeichnung.

Es zeigen:

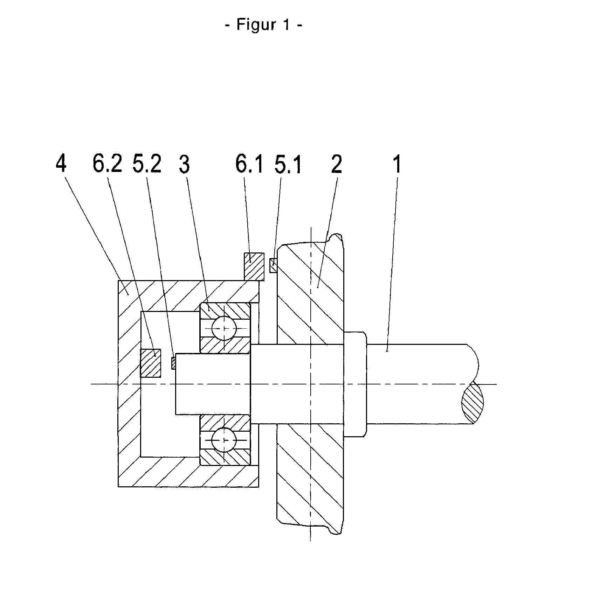

Fig. 1 eine Schnittdarstellung der installierten Messeinrichtung: Auf der Radsatzwelle 1 ist die Radscheibe 2 aufgepresst. Die Welle 1 ist über das Lager 3 im Lagergehäuse 4 gelagert. Als Bestandteil der Erfindung ist der Messpunkt 5.1 auf der Radscheibe 2 aufgebracht. Dieser Messpunkt 5.1 löst jeweils einmal pro Umdrehung den fest zum Lagergehäuse angebrachten Sensor 6.1 aus. Weiterhin ist der Messpunkt 5.2 außermittig auf der Radsatzwelle 1 aufgebracht. Messpunkt 5.2 löst ebenfalls einmal pro Umdrehung den fest zum Lagergehäuse angebrachten Sensor 6.2 aus.

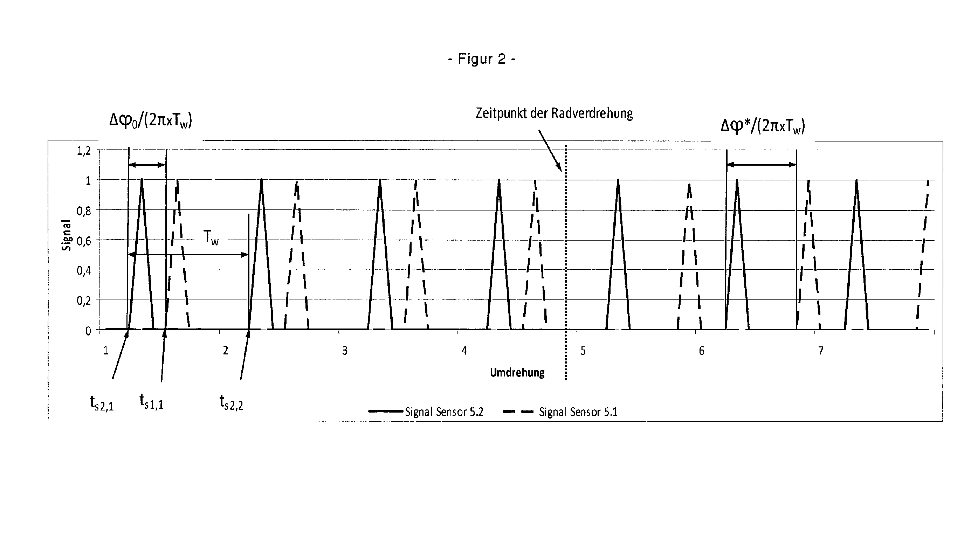

Fig.2 den prinzipiellen Verlauf der Messsignale und die Änderung der Phasenverschiebung durch eine Verdrehung zwischen Radsatzwelle und Radscheibe: Die durchgezogene Linie ist der zeitliche Verlauf des Signals von Sensor 5.2, die gestrichelte Linie der Signalverlauf des Sensors 5.1. Jeweils für die Zeit, in der der jeweils zugehörige Messpunkt am Sensor vorbeibewegt wird, liegt am Sensor ein Signal an. Dieses Signal ist hier vereinfacht als Dreiecksignal dargestellt. Während der ersten Umdrehung können die Zeiten $t_{s1,1}$ als Zeitpunkt der ersten Auslösung des Sensors 5.1 und $t_{s2,1}$ als Zeitpunkt der ersten Auslösung des Sensors 5.2 ermittelt werden, während der zweiten Umdrehung die Zeit $t_{s2,2}$ als Zeitpunkt der zweiten Auslösung des Sensors 5.2. Aus diesen Zeiten ergibt sich

$$T_W = t_{s2,2} - t_{s2,1}$$

und

$$\Delta t_{Sw,Sn} = t_{s1,1} - t_{s2,1}$$

Für den Verlauf in Figur 2 ist eine gleichbleibende Drehgeschwindigkeit gewählt, weshalb die Signale an den Sensoren 5.1 und 5.2 periodisch auftreten. Während der ersten vier Umdrehungen sitzt die Radscheibe fest auf der Radsatzwelle, so dass die zeitlichen Unterschiede zwischen dem Auftreten des Signals an Sensor 5.2 und 5.1 konstant sind. Im Verlauf der vierten Umdrehung ist eine Verdrehung der Radscheibe auf der Welle angenommen. Dadurch verlängert sich einmalig der Abstand zwischen zwei Signalen des Sensors 5.1, die Zeitdifferenz zwischen den Signalen des Sensors 5.2 und 5.1 wächst an und die berechnete Phasenverschiebung $\Delta\varphi$ verändert sich von $\Delta\varphi_0$ zu $\Delta\varphi^8$. Anschließend sitzt die Radscheibe wieder fest auf der Radsatzwelle, so dass der Abstand zwischen zwei Signalen des Sensors 5.1 wieder konstant bleibt. Auch $\Delta\varphi^8$ ändert sich nicht weiter.

Ein Ausführungsbeispiel für optische Verfahren ist eine Messung mit Infrarot-Sensoren. Dabei senden die Sensoren 6.1 und 6.2 Infrarotstrahlen aus. Die Fixpunkte 5.1 und 5.2 sind als Reflexmarkierungen ausgeführt. Je einmal pro Umdrehung wird der Infrarotstrahl von der Reflexmarkierung zum Sensor reflektiert, dieser Zeitpunkt kann gemessen werden.

Bei Anwendung von induktiven Messverfahren sind die Sensoren 6.1 und 6.2 als induktive Näherungsschalter ausgeführt, die Fixpunkte 6.1 und 6.2 als kleine metallische Körper. Wenn sich die metallischen Körper durch den Erkennungsbereich des Sensors bewegen, wird dieser bedämpft und diese Signaländerung wird als Auslösezeitpunkt verwendet.

Eine magnetische Messung kann durchgeführt werden, wenn die Fixpunkte 5.1 und 5.2 als Permanentmagnete ausgeführt sind, die Sensoren 6.1 und 6.2 als Hallsensoren. Die am sich am Sensor entlang bewegenden Magnete induzieren eine Spannung im Sensor, die Spannungsspitze wird als Auslösezeitpunkt verwendet.

## Vorteile der Erfindung

- permanente Überwachung des Eisenbahnradsatzes gegen Verdrehungen zwischen Radscheibe und Radsatzwelle
- Möglichkeit zur sofortigen Meldung einer Radscheibenverdrehung an den Triebfahrzeugführer
- dadurch gesteigerte Sicherheit des Eisenbahnbetriebs
- keine personengebundene Sichtprüfung notwendig
- Winkelverdrehung wesentlich exakter messbar im Vergleich zu Sichtprüfung

- Erkennung von Verdrehungen unabhängig von Witterungseinflüssen, Tageszeit sowie Verschmutzung und Zustand der Verdrehmarkierungen
- keine Energieübertragung zwischen drehenden und festen Bauteilen notwendig
- berührungslose Messung
- Verwendung von Standardbauteilen
- Losgelöst von mechanischen Abläufen in der Trennfuge zwischen Radsatzwelle und Radscheibe
- Anbauteile auf Radscheibe und Radsatzwelle unabhängig voneinander

## Bezugszeichenliste

(1)     Radsatzwelle

(2)     Radscheibe

(3)     Lager

(4)     Lagergehäuse

(5.1)   Messpunkt auf der Radscheibe
(5.2)   Messpunkt auf der Radsatzwelle
(6.1)   Sensor zur Erkennung des Messpunkts auf der Radscheibe
(6.2)   Sensor zur Erkennung des Messpunkts auf der Radsatzwelle

## Patentansprüche

1. Verfahren zur Erkennung von dauerhaften Verdrehungen zwischen einer als Nabenkörper ausgebildeten Radscheibe eines Schienenfahrzeuges und einer Welle eines Radsatzes, wobei die Radscheibe auf die Radsatzwelle aufgepresst wird, *gekennzeichnet dadurch, dass* ein Phasenwinkel zwischen der Radscheibe (2) und der Radsatzwelle (1) über das Auslösen eines an einem Lagergehäuse (4) befestigten Sensors (6.1) durch einen auf der Radscheibe (2) festgelegten Messpunkt (5.1) sowie das Auslösen eines ebenfalls am Lagergehäuse befestigten Sensors (6.2) durch einen auf der Radsatzwelle (1) befestigten Messpunkt (5.2) in zwei Drehrichtungen berechnet und mit einem bei Inbetriebnahme kalibrierten Phasenwinkel $\Delta\varphi_0$ verglichen wird, wobei die Berechnung bei einer Drehrichtung "vorwärts" über die Beziehung

$$\Delta\varphi = \frac{\Delta t_{Sw,Sn}}{T_W} \times 2\pi$$

und bei einer Drehrichtung "rückwärts" über die Beziehung

$$\Delta\varphi = \left(1 - \frac{\Delta t_{Sw,Sn}}{T_W}\right) \times 2\pi$$

mit

$\Delta\varphi$ : Phasenwinkel

$T_W$: Dauer für eine Umdrehung der Welle, gemessen als Differenz zwischen zwei Auslösepunkten des Sensors (6.2) [s]

$\Delta t_{sw,sn}$: zeitliche Differenz zwischen dem Auslösen des Sensors (6.2) und des Sensors (6.1) [s] durchgeführt wird, als Auslösezeitpunkt eine steigende Flanke (erster Ansprechpunkt des jeweiligen Sensors) gewählt und bei einer aufgetretenen Verdrehung ein Warnsignal an ein Rechengerät ausgegeben wird.

2. Verfahren nach Anspruch 1, *gekennzeichnet dadurch, dass* ein inkrementaler Drehwinkelzähler mit einem definierten Nullpunkt auf einem Bauteil verwendet wird, wobei die Inkremente zwischen dem Durchgang des Nullpunktes und dem Durchgang des Fixpunkts auf dem anderen Bauteil gezählt werden.

3. Verfahren nach Anspruch 1 und 2, *gekennzeichnet dadurch, dass* ein Drehwinkelzähler mit einer Ausgabe des Absolutwertes verwendet wird und ein Vergleich der Übereinstimmung der Erkennung des Fixpunktes auf dem anderen Bauteil mit einem festgelegten Winkelwert erfolgt.

4. Verfahren nach Anspruch 1 bis 3, *gekennzeichnet dadurch, dass* optische Messverfahren verwendet werden.

5. Verfahren nach Anspruch 1 bis 3, *gekennzeichnet dadurch, dass* induktive Messverfahren verwendet werden.

6. Verfahren nach Anspruch 1 bis 3, *gekennzeichnet dadurch, dass* magnetische Messverfahren verwendet werden.

7. Verfahren nach Anspruch 1 bis 6, *gekennzeichnet dadurch, dass* gleichzeitig dauerhaft Verdrehungen von zwei oder mehreren auf derselben Welle aufgepressten Nabenkörpern unter Einsatz von einem definierten Punkt auf jeder Nabe unter Bezug auf denselben Messwert der Welle gemessen werden.

8. Verfahren nach Anspruch 1 bis 7, *gekennzeichnet dadurch, dass* die Verdrehung eines Nabenkörpers am Rechengerät angezeigt wird.

9. Verfahren nach Anspruch 1 bis 8, *gekennzeichnet dadurch, dass* bei Verdrehung eines Nabenkörpers am Rechengerät ein Ausgangssignal angezeigt wird.

10. Vorrichtung zur Erkennung von dauerhaften Verdrehungen zwischen einer als Nabenkörper ausgebildeten Radscheibe eines Schienenfahrzeuges und einer Welle eines Radsatzes, *gekennzeichnet dadurch, dass* auf der Radsatzwelle (1) das Lager (3) und das Lagergehäuse (4) angeordnet sind, wobei an einem Ende der Radsatzwelle (1) ein Messpunkt (5.2) und dem gegenüber an der Innenseite des Lagergehäuses (4) ein Sensor (6.2) angeordnet sind und auf der Radsatzwelle (1) eine aufgepresste Radscheibe (2) mit einem an deren Außenseite befindlichen Messpunkt (5.1) sowie einem am Lagergehäuse (4) befindlichen Sensor (6.1) angeordnet ist.

11. Vorrichtung nach Anspruch 10, *gekennzeichnet dadurch, dass* der Messpunkt (5.2) an der Stirnseite der Radsatzwelle (1) angeordnet ist.

12. Vorrichtung nach Anspruch 10 und 11, *gekennzeichnet dadurch, dass* der Sensor (6.2) an der vertikalen Innenseite des Lagergehäuses (4) angeordnet ist.

- Figur 1 -

- Figur 2 -

$\Delta\varphi_0/(2\pi \times T_w)$

Zeitpunkt der Radverdrehung

$\Delta\varphi^*/(2\pi \times T_w)$

$t_{s2,1}$  $t_{s1,1}$  $t_{s2,2}$

Signal Sensor 5.2   — — Signal Sensor 5.1

EP 2 573 511 A1

Europäisches
Patentamt

European
Patent Office

Office européen
des brevets

**EUROPÄISCHER RECHERCHENBERICHT**

Nummer der Anmeldung

EP 12 00 6605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2011/029526 A1 (LIPPEL JUERGEN [DE]; SUYUR ALI [TR]) 17. März 2011 (2011-03-17) * das ganze Dokument * ----- | 1-12 | INV. G01B21/22 G01B21/32 G01L3/10 |
| A | DE 196 50 249 A1 (BOSCH GMBH ROBERT [DE]) 10. Juni 1998 (1998-06-10) * Zusammenfassung * * Spalte 1, Zeile 52 - Spalte 2, Zeile 14 * * Spalte 3, Zeile 38 - Spalte 4, Zeile 12 * * Seiten 1,2 * ----- | 1-12 | |
| A | US 5 520 059 A (GARSHELIS IVAN J [US]) 28. Mai 1996 (1996-05-28) * Zusammenfassung * * Spalte 17, Zeilen 29-44 * ----- | 1,10 | |

| | |
|---|---|
| | RECHERCHIERTE SACHGEBIETE (IPC) |
| | G01L |

Der vorliegende Recherchenbericht wurde für alle Patentansprüche erstellt

| Recherchenort | Abschlußdatum der Recherche | Prüfer |
|---|---|---|
| München | 28. Januar 2013 | Poizat, Christophe |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 00 6605

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-2013

| Im Recherchenbericht angeführtes Patentdokument | Datum der Veröffentlichung | Mitglied(er) der Patentfamilie | Datum der Veröffentlichung |
|---|---|---|---|
| WO 2011029526 A1 | 17-03-2011 | DE 102009023204 A1<br>DE 212010000145 U1<br>WO    2011029526 A1 | 03-05-2012<br>18-05-2012<br>17-03-2011 |
| DE 19650249 A1 | 10-06-1998 | DE    19650249 A1<br>FR     2756627 A1<br>IT     MI972614 A1<br>JP     10169476 A | 10-06-1998<br>05-06-1998<br>04-06-1998<br>23-06-1998 |
| US 5520059 A | 28-05-1996 | CA     2190974 A1<br>DE    69527983 D1<br>DE    69527983 T2<br>EP     0803053 A1<br>JP     2914526 B2<br>JP    H09511832 A<br>US     5520059 A<br>WO     9533982 A1 | 14-12-1995<br>02-10-2002<br>28-05-2003<br>29-10-1997<br>05-07-1999<br>25-11-1997<br>28-05-1996<br>14-12-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219057 A1
- AT 15268 E
- WO 2011029526 A1